# FASCICULE DE BREVET EUROPEEN

(11) **EP 1 152 681 B1**
(45) Date de publication et mention de la délivrance du brevet: **10.09.2003**
(21) Numéro de dépôt: 00906434.6
(22) Date de dépôt: 18.02.2000
(51) Int. Cl.: A47J 37/12

(54) **DISPOSITIF DE MONTE ET BAISSE POUR PANIER DE CUISSON**
VERFAHREN ZUM HEBEN UND SENKEN EINES FRITIERKORBES
DEVICE FOR RAISING AND LOWERING A COOKING BASKET

(30) Priorité: 19.02.1999 FR 9902265
(43) Date de publication de la demande: 14.11.2001
(73) Titulaire: SEB S.A., 69130 Ecully (FR)
(72) Inventeur: DESNOYERS, Jean-Claude, 21220 Curtile Vergy (FR)
(74) Mandataire: Kiehl, Hubert
(86) Numéro de dépôt international: FR0000419
(87) Numéro de publication internationale: WO00048497

(56) Documents cités:
- EP-A- 0 891 736
- WO-A-94/26157
- DE-A- 2 931 859
- FR-A- 2 701 376
- FR-A- 2 754 163
- US-A- 1 198 374
- US-A- 5 746 117

## Description

La présente invention concerne le domaine technique général des appareils de cuisson comportant un récipient de cuisson, destiné à contenir un bain de cuisson, et un panier de cuisson, destiné à contenir les aliments à cuire. La présente invention se rapporte plus particulièrement mais non exclusivement aux friteuses électriques à cuve amovible.

Il est connu du document US 1 198 374 de réaliser un appareil pour la cuisson des oeufs comportant un récipient et un panier de cuisson monté coulissant sur deux tiges verticales issues du fond du récipient. L'appareil comporte également un manche de préhension du récipient et une manette prévue pour la remontée du panier, cette manette étant articulée en rotation sur le panier et sur le rebord du récipient. Un crochet monté sur le manche permet d'immobiliser la manette en position relevée du panier. Un tel dispositif permet à volonté de remonter ou de descendre le panier de cuisson dans le récipient et d'immobiliser le panier en position haute. Toutefois un tel dispositif présente un certain nombre d'inconvénients. Tout d'abord le coulissement du panier sur les tiges verticales est susceptible de présenter des blocages, la manette étant mobile en rotation. Ensuite, le dispositif comporte des tiges fixées au fond du récipient, et le panier n'est pas amovible du récipient.

Le document FR 2 701 376 décrit une friteuse électrique comportant un panier de cuisson associé à un dispositif de monte et baisse à parallélogramme. Le dispositif comporte un support venant en appui sur le rebord d'une cuve. Deux bras parallèles disposés l'un au dessus de l'autre sont articulés d'une part sur le support et d'autre part sur le panier. Le bras supérieur se prolonge au delà du support par une partie recourbée susceptible de coopérer avec une branche d'un levier de commande monté en rotation sur le support, l'autre branche du levier étant susceptible de coopérer avec une poignée montée coulissante et libre en rotation sur le support. L'axe de guidage de cette poignée coulisse dans une glissière. A l'une des extrémités de la glissière un point dur permet d'immobiliser l'axe en translation. La rotation de la poignée fait pivoter le levier, lequel entraîne le bras supérieur du dispositif de monte et baisse, remontant ainsi le panier.

Un tel dispositif de monte et baisse permet de disposer d'un panier solidaire d'une poignée de préhension, pouvant être retiré de la cuve. Toutefois, la commande de la remontée apparaît relativement fragile et le mouvement en arc de cercle du panier dans la cuve nécessite de la place. De plus le bras supérieur du panier est simplement retenu par le levier, et non pas articulé sur le levier, ce qui ne permet pas de contrôler la descente du panier en cas d'un blocage passager du panier.

Il est connu du document US 5 746 117 de réaliser un dispositif de monte et baisse à parallélogramme comportant un support venant en appui dans une échancrure d'une cuve. Deux bras parallèles disposés l'un au dessus de l'autre sont articulés d'une part sur le support et d'autre part sur le panier. Une poignée est articulée sur le support et comporte sur ses faces latérales au niveau de l'articulation deux rainures en arc de cercle. Une extrémité d'un levier monté articulé sur le support coulisse dans les rainures. L'autre extrémité du levier coopère avec le bras supérieur par l'intermédiaire d'un élément de transmission. La poignée est susceptible d'occuper une position verticale, dans laquelle le panier de cuisson occupe une position basse dans la cuve, et une position horizontale, dans laquelle le panier occupe une position relevée. Le panier en position relevée s'oppose au pivotement de la poignée vers la position verticale. L'échancrure dans la cuve est nécessaire pour immobiliser le support lors du pivotement de la poignée.

Un tel dispositif présente l'avantage de proposer un panier pouvant être immobilisé en position relevée, tout en étant amovible de la cuve. Toutefois l'échancrure pratiquée dans la cuve peut favoriser les risques de fuite du bain de cuisson ou les échappements d'odeurs si un joint approprié n'est pas prévu. De plus le dispositif proposé n'est pas très facile à nettoyer notamment au niveau des bras montés sur le support. En outre le mouvement de la poignée dans les rainures est susceptible de présenter des frottements importants.

En cas d'utilisation de matières grasses solides à température ambiante, telles que par exemple des huiles végétales hydrogénées ou des matières grasses animales, l'utilisateur de cet appareil ne peut pas rabaisser la poignée en position verticale quand la matière grasse a figé sous le panier.

Il est connu du document FR 2 754 163 de réaliser un dispositif de monte et baisse d'un panier monté coulissant dans une glissière fixée à un support venant s'accrocher sur le rebord d'une cuve. Le panier est manoeuvré par l'intermédiaire d'une lame métallique souple au moyen d'une poignée articulée sur le support. Dans les dispositifs de ce type la lame métallique souple est susceptible d'être endommagée si l'utilisateur essaie de manoeuvrer la poignée pour descendre le panier alors que la matière grasse a figé sous le panier.

Il est également connu de réaliser un dispositif de monte et baisse du type précité dans lequel le panier est monté coulissant contre un ressort de rappel et la poignée comporte un organe de blocage permettant d'immobiliser le panier en position relevée. La poignée est alors horizontale. Un tel dispositif ne permet pas de rabaisser la poignée en position verticale quand la matière grasse a figé sous le panier.

L'objet de la présente invention vise à proposer un dispositif de monte et baisse d'un panier dans une cuve, qui permette de retirer le panier de la cuve, et qui soit d'une grande fiabilité et d'une bonne sécurité.

Un autre objet de la présente invention vise à proposer un dispositif de monte et baisse d'un panier dans une cuve, qui permette d'exploiter au mieux la géométrie de la cuve.

Un autre objet de la présente invention vise à proposer un dispositif de monte et baisse d'un panier dans une cuve, dont la manoeuvre soit particulièrement aisée.

Un autre objet de la présente invention vise à proposer un dispositif de monte et baisse d'un panier dans une cuve, susceptible d'être aisément adapté à différentes courses du panier dans la cuve.

Un autre objet de la présente invention vise à proposer un dispositif de monte et baisse d'un panier dans une cuve, dont le nettoyage soit facilité.

Un autre objet de la présente invention vise à proposer un dispositif de monte et baisse d'un panier dans une cuve facilitant l'utilisation de matières grasses figeant à température ambiante.

Un autre objet de la présente invention vise à proposer un dispositif de monte et baisse d'un panier dans une cuve permettant de bloquer le panier en position relevée.

Un autre objet de la présente invention vise à proposer un dispositif de monte et baisse d'un panier dans une cuve permettant d'éviter la descente du panier lorsque ledit dispositif est retiré de l'appareil.

Les objets assignés à l'invention sont atteints avec un dispositif de monte et baisse d'un panier dans une cuve d'un appareil de cuisson, notamment friteuse, comportant un support prévu pour venir en appui sur l'appareil, une poignée, articulée sur le support, mobile entre une première position, dans laquelle le panier occupe une position relevée dans la cuve, et une deuxième position, dans laquelle le panier occupe une position abaissée dans la cuve, un levier articulé en un axe par rapport au support, une branche du levier étant reliée au panier par un ou plusieurs moyens d'accrochage, l'autre branche du levier étant reliée à la poignée, du fait que la poignée est montée articulée sur le support selon un axe sensiblement parallèle à l'axe du levier, l'autre branche du levier comportant une articulation avec l'extrémité d'une pièce de transmission dont l'extrémité opposée est montée coulissante dans la poignée, la pièce de transmission comportant en outre une deuxième articulation avec une pièce de retenue articulée en un deuxième axe par rapport au support.

Ces dispositions permettent également de réaliser un dispositif de monte et baisse présentant une grande fiabilité ainsi qu'une bonne sécurité, grâce à son montage articulé. Ainsi lorsque l'utilisateur a relevé la poignée pour relever le panier, l'utilisateur est assuré que le panier ne va pas retomber dans le bain de cuisson s'il lâche la poignée. L'utilisateur peut alors retirer le panier. Le panier entraîné par le levier peut notamment, mais non exclusivement, être monté sur une glissière.

Avantageusement l'axe est disposé au dessus de la zone d'appui sur l'appareil. Une telle disposition permet de limiter les efforts exercés par le support sur l'appareil.

Avantageusement, le premier axe, la première articulation et la deuxième articulation forment un angle inférieur à 90° lorsque la poignée occupe la deuxième position. Un tel dispositif est autobloquant lorsque le levier est en position relevée. Le poids du panier tend à entraîner le levier dans la direction opposée à celle correspondant à la descente dudit panier. Ainsi lorsque l'utilisateur a relevé la poignée pour relever le panier, l'utilisateur est assuré que le panier ne va pas retomber dans le bain de cuisson s'il lâche la poignée. L'utilisateur peut alors retirer le panier, qui reste bloqué en position haute.

Avantageusement encore, la poignée comporte un organe de verrouillage prévu pour bloquer le coulissement de la pièce de transmission lorsque la poignée occupe la deuxième position correspondant à la position relevée du panier. Ainsi l'utilisateur ne risque pas de faire redescendre involontairement le panier en manoeuvrant la poignée.

Selon une construction avantageuse le support est formé par deux demi boîtiers assemblés, formant un logement pour le passage d'une des extrémités du levier et de la pièce de transmission, la pièce de retenue étant disposée dans ledit logement, ledit logement comportant des surfaces d'étanchéité avec le levier. D'une réalisation économique, une telle construction permet d'assurer l'étanchéité du dispositif de monte et baisse disposé sur l'appareil.

Egalement selon une construction avantageuse, le levier est formé par une pièce de tôle métallique de forme allongée et repliée en U, formant deux bras dont les extrémités viennent enserrer la pièce de transmission au niveau de la première articulation. Une telle disposition permet d'assurer une bonne rigidité et une bonne solidité au mécanisme avec un encombrement réduit, notamment en largeur.

La pièce de transmission est alors formée par une pièce de tôle métallique de forme allongée dont l'une des extrémités est assemblée au moyen d'un axe, avec les extrémités des deux bras du levier pour former la première articulation, et sur laquelle sont assemblées de part et d'autre au moyen d'un autre axe deux pièces de retenue pour former la deuxième articulation, de telles dispositions peu onéreuses garantissant un dispositif fiable.

Avantageusement les bras du levier s'écartent l'un de l'autre vers l'extrémité dudit levier en relation avec le moyen d'accrochage du panier, une telle disposition permettant d'améliorer la stabilité du moyen d'accrochage tout en réduisant l'encombrement du support.

Selon une disposition avantageuse, un organe de détection de présence de l'appareil est monté dans le support, ledit organe de détection comportant un moyen de blocage du levier dans une position correspondant à la position relevée du panier. Une telle disposition permet en effet d'éviter le renversement du panier sorti de l'appareil.

Selon une autre disposition avantageuse, le dispositif de monte et baisse comporte un moyen de freinage de la descente du panier, ledit moyen de freinage étant monté dans la poignée, ledit moyen de freinage coopérant avec la pièce de transmission. La disposition du moyen de freinage en zone froide dans la poignée permet une meilleure fiabilité. Le moyen de freinage est par exemple formé par un bloc d'élastomère sur lequel vient frotter la pièce de transmission.

Avantageusement le dispositif de monte et baisse comporte une glissière issue du support et descendant dans la cuve, des moyens de guidage du panier montés coulissants sur la glissière, le moyen d'accrochage du panier étant monté mobile en rotation d'une part sur l'une des branches du levier et d'autre part sur le panier ou ses moyens de guidage. Ces dispositions permettent de réaliser un dispositif de monte et baisse présentant une grande fiabilité et une bonne sécurité, grâce à l'utilisation de moyens permettant une prise directe du panier par rapport aux moyens de manoeuvre dudit panier. Les risques liés à une descente non contrôlée du panier consécutive à un blocage temporaire dudit panier sont ainsi écartés. De plus le mouvement du panier sur la glissière permet d'exploiter au mieux la géométrie de la cuve. Le panier amené en position relevée peut être retiré de l'appareil avec la poignée. Si désiré, le dispositif peut comporter des moyens de blocage du levier dans une position correspondant à la position relevée du panier, afin de faciliter le retrait du panier lorsque l'utilisateur saisit la poignée.

Avantageusement encore, le levier comporte plusieurs moyens de retenue du moyen d'accrochage prévus pour être utilisés en alternative. Ainsi à partir d'un seul mécanisme il est possible d'adapter la longueur de la course du panier tel que désiré, par exemple en fonction de la hauteur de la cuve de l'appareil.

Avantageusement encore, le moyen d'accrochage est susceptible d'être décroché du panier, de ses moyens de guidage ou du levier. Une telle disposition permet, après avoir décroché le moyen d'accrochage, de replacer le dispositif de monte et baisse dans l'appareil comportant de la matière grasse figée au fond de la cuve. Une telle disposition est intéressante notamment lorsque la position relevée du levier correspond à une position proéminente de la poignée hors de l'appareil.

Avantageusement alors, le moyen d'accrochage est une pièce filaire présentant une flexibilité telle qu'elle soit apte à se décrocher du panier, de ses moyens de guidage ou du levier lorsque, le panier étant bloqué, l'effort sur le levier dépasse un effort déterminé. Une telle disposition permet de décrocher automatiquement le panier arrivant en contact avec des matières grasses figées au fond de la cuve lors de la manoeuvre de descente du panier.

Avantageusement alors, la glissière est dimensionnée de telle sorte à pouvoir sortir les moyens de guidage du panier de ladite glissière lorsque le moyen d'accrochage a été décroché. Une telle disposition permet tout d'abord de faciliter le montage mais plus encore de faciliter le nettoyage du panier. Le panier ainsi décroché peut être passé au lave vaisselle pour un nettoyage approfondi alors que la glissière, moins sale, solidaire du support et de la poignée, peut être rincée et essuyée plus simplement.

Avantageusement encore, la partie inférieure de la glissière est susceptible de prendre appui contre la cuve, une telle disposition permettant de limiter les efforts au niveau du support.

Avantageusement encore la glissière présente une échancrure dans laquelle le levier est susceptible de se déplacer. Une telle disposition permet de réduire l'encombrement de l'appareil. En effet le levier dans la position basse du panier peut se trouver très près de la cuve. Ainsi le levier en position haute du panier occupe après pivotement une altitude moins élevée.

Avantageusement encore la glissière comporte deux points de fixation avec le support disposés de part et d'autre du levier. Une telle disposition permet d'assurer un bon ancrage de la glissière dans le support. Une telle disposition permet aussi de réduire la hauteur du support.

Selon un mode de réalisation, l'organe de détection est formé par une pièce montée mobile contre un ressort dans le support, la pièce comportant une partie susceptible d'être déplacée par l'appareil contre le ressort lorsque le support est en place sur l'appareil, le. moyen de blocage étant ménagé sur la pièce et étant susceptible de coopérer avec une butée ménagée sur le levier. Une telle construction est fiable et économique.

L'invention sera mieux comprise à l'étude d'exemples de réalisation pris à titre nullement limitatif et illustrés dans les figures annexées dans lesquelles :
- la figure 1 est une vue en perspective d'un premier exemple de réalisation d'un dispositif selon l'invention, en position abaissée du panier,
- les figures 2 et 3 sont des vues latérales en coupe d'un deuxième exemple de réalisation d'un dispositif selon l'invention, respectivement en position abaissée et relevée du panier,
- les figures 4a et 5a montrent des vues latérales en coupe, respectivement en position abaissée et relevée du panier, d'une variante de réalisation du dispositif montré aux figures 2 et 3, les figures 4b et 5b montrant des détails respectivement des figures 4a et 5a,
- la figure 6 montre en perspective le mécanisme de la variante montrée aux figures 4a, 4b, 5a et 5b.
- la figure 7 montre selon une vue partielle en coupe une deuxième variante du dispositif montré aux figures 2 et 3.

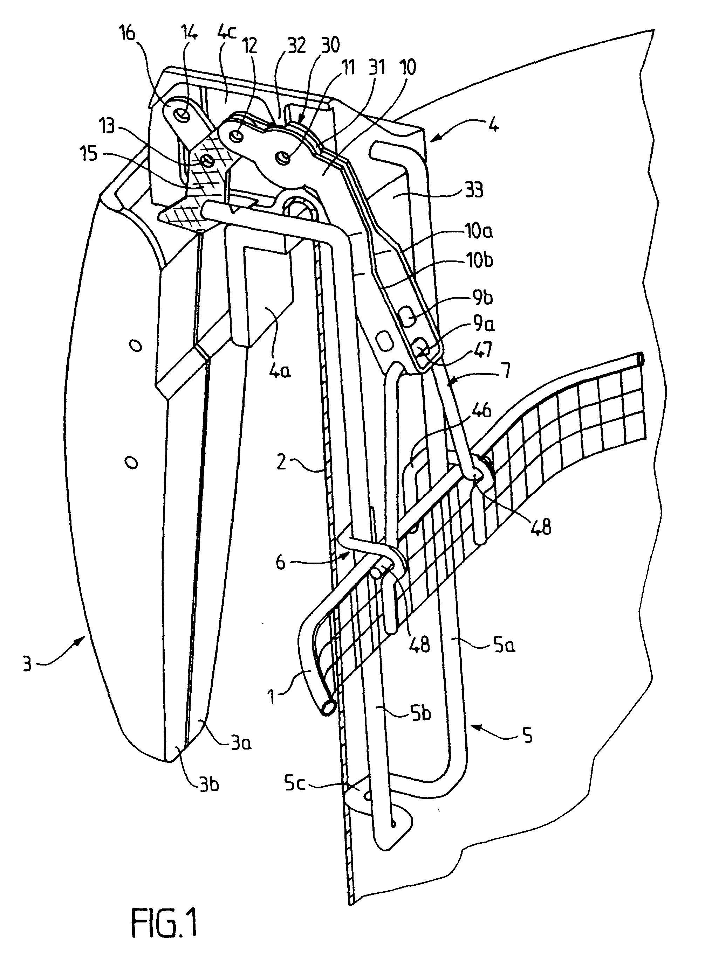

La figure 1 montre un dispositif de monte et baisse d'un panier 1 disposé sur le rebord d'une cuve 2 d'un appareil de cuisson tel qu'une friteuse électrique. le dispositif de monte et baisse du panier 1 comporte un support 4 prévu pour venir en appui sur l'appareil, plus précisément sur le rebord de la cuve 2. Une glissière 5 issue du support 4 descend dans la cuve 2. Des moyens de guidage 6 du panier 1, sont montés coulissants sur la glissière 5, seule une partie des moyens de guidage 6 et du panier 1 étant représentée à la figure 1. Le dispositif comporte également une poignée 3 montée articulée sur le support 4.

La poignée 3 est mobile entre une première position, sensiblement horizontale, dans laquelle le panier 1 occupe une position relevée dans la cuve 2, et une deuxième position, sensiblement verticale avec l'extrémité libre de la poignée 3 orientée vers le bas, dans laquelle le panier 1 occupe une position abaissée dans la cuve 2, tel que montré à la figure 1.

Le dispositif comporte un levier 10 articulé en un axe 11 par rapport au support 4 et un moyen d'accrochage 7 du panier 1, monté mobile en rotation d'une part sur l'une des branches du levier 10 et d'autre part sur le panier 1 ou son moyen de guidage 6, la poignée 3 étant reliée à l'autre branche du levier, si désiré au moyen d'un mécanisme, le dispositif comportant en outre des moyens de blocage du levier 10 dans une position correspondant à la position relevée du panier.

Tel que montré à la figure 1, l'autre branche du levier 10 comporte une articulation 12 avec l'extrémité d'une pièce de transmission 15. L'extrémité de la pièce de transmission 15 opposée à l'articulation 12 est montée coulissante dans la poignée 3. La pièce de transmission 15 comporte en outre une deuxième articulation 13 avec une première extrémité d'une pièce de retenue 16 articulée en son autre extrémité par un deuxième axe 14 par rapport au support 4.

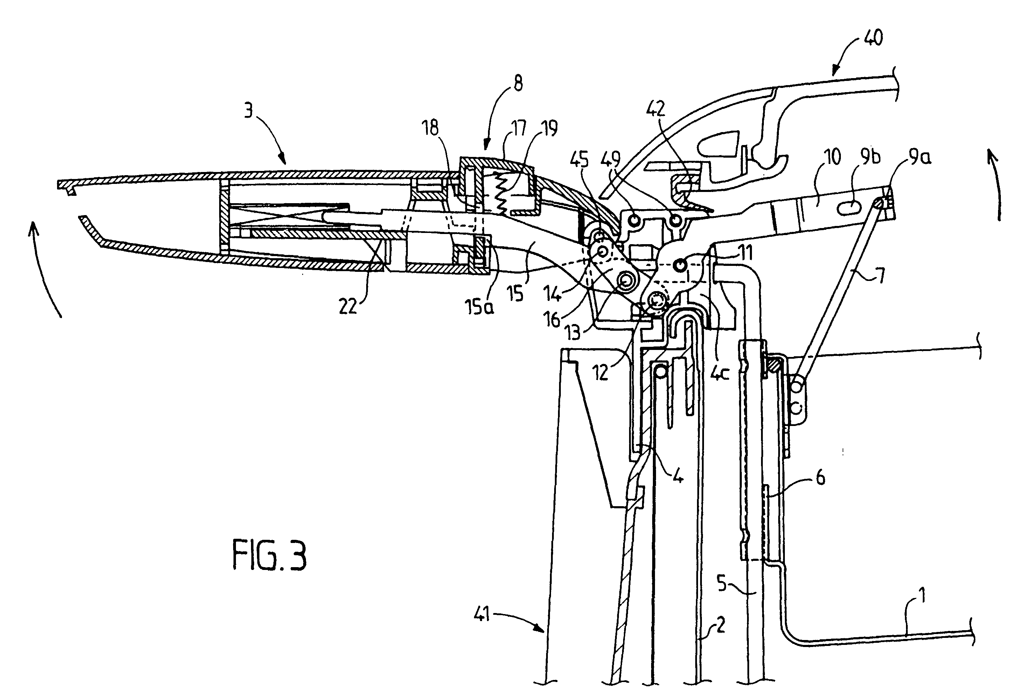

Le support 4 est formé par deux demi boîtiers, avantageusement symétriques, dont l'un 4a seulement est montré à la figure 1. Les deux demi boîtiers assemblés forment un logement 4c permettant le passage de l'une des extrémités du levier 10 et de l'une des extrémités de la pièce de transmission 15. La pièce de retenue 16 est également disposée dans le logement 4c contre le demi boîtier 4a. Le logement 4c comporte des surfaces d'étanchéité avec le levier 10, notamment des surfaces 32 en arc de cercle coopérant avec des secteurs circulaires 30 du levier 10 concentriques avec le premier axe 11 de rotation et ainsi que des surfaces coopérant avec les parois du levier 10. De préférence une deuxième pièce de retenue, identique à celle montrée à la figure 1, peut être disposée de manière symétrique dans le logement 4c contre l'autre demi boîtier. Tel que bien visible à la figure 3, le support 4 comporte une rainure inférieure prenant appui sur le rebord de la cuve 2 ainsi qu'une partie descendant le long du boîtier de l'appareil, permettant de d'améliorer la stabilité lors du relevage du panier 1.

Le premier axe de rotation 11 et le deuxième axe de rotation 14 sont par exemple formés par des tiges métalliques (non montrées aux figures) emmanchées à force dans chacun des demi boîtiers, ces tiges traversant respectivement le levier 10 et la ou les pièces de retenue 16.

Le levier 10 est formé par une pièce de tôle métallique de forme allongée et repliée en U, la pliure formant la première branche de levier où est articulé le moyen d'accrochage du panier, les extrémités libres des deux bras 10a, 10b venant enserrer la pièce de transmission 15 au niveau de la première articulation 12. Une rondelle d'étanchéité 31 est disposée entre les deux bras 10a, 10b du levier 10 au niveau du premier axe 11, le diamètre de ladite rondelle étant égal à celui des secteurs circulaires 30.

La pièce de transmission 15 est formée par une pièce de tôle métallique de forme allongée dont l'une des extrémités est assemblée au moyen d'un axe (non montré à la figure 1), formé par exemple par un rivet, avec les extrémités des deux bras 10a, 10b du levier 10 pour former la première articulation 12. Sur la pièce de transmission 15 sont assemblées, au moyen d'un autre axe (également non montré à la figure 1), formé par exemple aussi par un rivet, les pièces de retenue 16, pour former la deuxième articulation 13.

La poignée 3 est de préférence formée par deux demi coques 3a, 3b formant un logement à l'intérieur duquel est susceptible de se déplacer la pièce de transmission 15.

Les bras 10a, 10b du levier 10 s'écartent vers l'extrémité du levier en relation avec le moyen d'accrochage 7 du panier 1. Le levier 10 comporte plusieurs moyens de retenue 9a, 9b du moyen d'accrochage 7.

Le moyen d'accrochage 7 est formé par une tige métallique de section circulaire dont la partie centrale 47 est enfilée dans deux orifices formant les moyens de retenue 9a, ces orifices étant ménagés chacun dans l'un des bras du levier 10. De part et d'autre de cette partie centrale, la tige forme deux coudes pour se prolonger en direction du panier 1. Les extrémités 48 de la tige formant le moyen d'accrochage 7 sont recourbées pour venir en prise avec des lobes appartenant à des éléments 46 constituant les moyens de guidage 6. Les éléments 46 sont de préférence soudés sur le panier 1.

Le levier 10, le moyen d'accrochage 7 et le panier 1 sont ainsi en prise directe, ce qui évite que le panier puisse à la suite d'un coincement temporaire se dégager de ses moyens d'entraînement pour ensuite retomber, au risque de provoquer des éclaboussures si la cuve comporte un bain de cuisson.

L'utilisateur peut libérer les extrémités 48 des éléments 46 par simple pression sur les branches de la tige formant le moyen d'accrochage 7.

A titre de variante, non montré aux figures, le moyen d'accrochage 7 pourrait être monté sur le panier 1.

A titre de variante, non montrée aux figures, les extrémités 48 pourraient être relevées de manière à favoriser leur dégagement des lobes 46 lorsque le panier 1 vient en appui sur la matière grasse ayant figé.

A titre de variante, non montrée aux figures, la partie centrale 47 pourrait être montée sur le panier 1 et les extrémités 48 pourraient être montées sur le levier 10.

La glissière 5 sur laquelle coulisse le moyen de guidage 6 est formée par deux tiges métalliques parallèles 5a, 5b. L'extrémité supérieure des tiges 5a, 5b est recourbée pour être montée respectivement dans l'un 4a et l'autre des demi boîtiers formant le support 4. Les extrémités inférieures des tiges 5a, 5b se rejoignent en un coude 5c, les deux tiges 5a, 5b étant de préférence issues de la même pièce repliée.

Tel que montré à la figure 1 la glissière 5 présente entre les deux tiges 5a, 5b une échancrure 33 occupée en partie par le levier 10.

Tel que montré à la figure 1 l'extrémité libre coudée 5c de la glissière 5 est repliée de manière à d'une part prendre appui contre la cuve 2 et d'autre part permettre le passage des moyens de guidage 6 après avoir décroché les moyens d'accrochage 7 pour sortir le panier 1 de la glissière 5.

La glissière 5, les moyens de guidage 6, et les moyens d'accrochage 7 sont réalisés de préférence en acier inoxydable, pour les qualités alimentaires de ce matériau d'une part, et pour sa faible conductibilité thermique et sa faible capacité calorifique d'autre part, qui permettent de limiter la montée en température et de faciliter le refroidissement. Le panier 1 peut notamment être réalisé en métal traité.

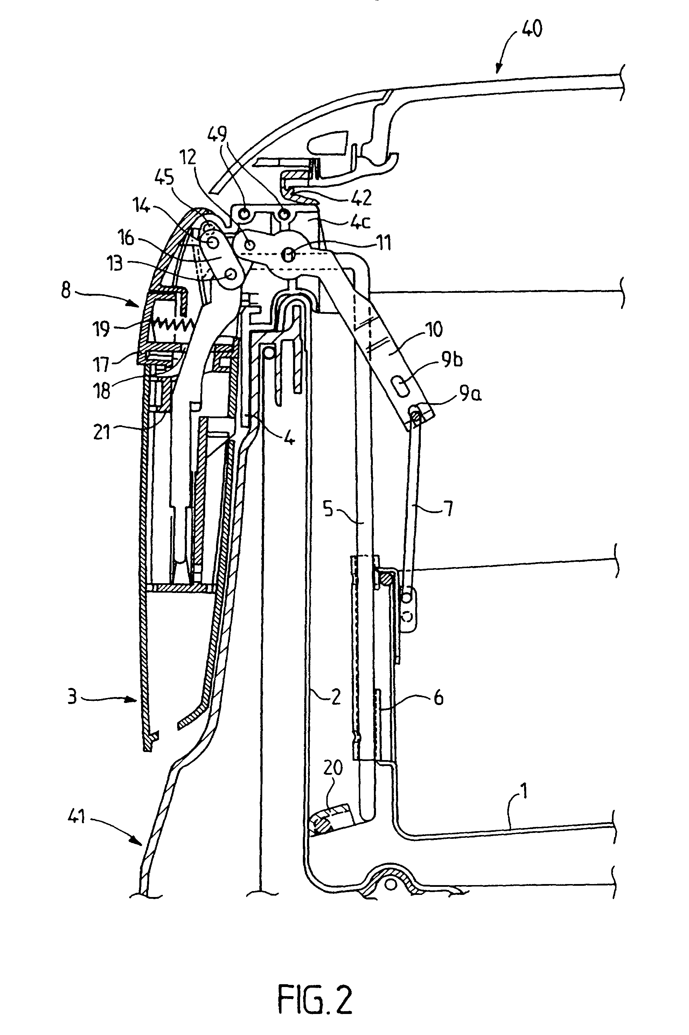

Le fonctionnement du dispositif de monte et baisse sera expliqué en référence aux figures 2 et 3 présentant un autre exemple de réalisation, dont les différences avec l'exemple de réalisation précédent sont exposées ci-après.

Tel que montré à la figure 2, l'extrémité inférieure de la glissière 5 porte un embout de protection 20 en contact avec la cuve 2.

La friteuse représentée aux figures 2 et 3 comporte une enveloppe 41 formant un logement dans lequel est disposée la cuve 2. Un couvercle 40 est équipé d'un joint 42 prévu pour venir en appui sur le rebord de la cuve 2 ou tel que montré aux figures 2 et 3, sur la face supérieure du support 4. On remarquera que le demi boîtier 4a porte deux ergots 49 d'assemblage avec l'autre demi boîtier. La poignée 3 est articulée sur le support 4 grâce à une charnière 45 présentant un axe horizontal.

Lorsque le dispositif de monte et baisse est en place dans l'appareil avec la poignée 3 occupant la position sensiblement verticale présentée à la figure 2, le panier 1 monté sur la glissière 5 et accroché au levier 10 par le moyen d'accrochage 7 occupe une position abaissée utilisée pour la friture en bain d'huile.

Tel que montré à la figure 2 l'angle de la deuxième articulation 13 entre la pièce de transmission 15 et les pièces de retenue 16 est légèrement inférieur à 90°, et l'angle de la première articulation 12 entre la pièce de transmission 15 et le levier 10 est légèrement supérieur à 90°.

Lorsque l'utilisateur manoeuvre la poignée 3 en rotation dans le sens horaire pour amener ladite poignée à la position sensiblement horizontale présentée à la figure 3, les pièces de retenue 16 pivotent d'abord dans le sens horaire puis dans le sens antihoraire, la pièce de transmission 15, articulée à la fois sur le levier 10 et sur les pièces de retenue 16, pivote avec la poignée 3 dans le sens horaire tout en coulissant à l'intérieur de ladite poignée. La rotation dans le sens horaire de la pièce de transmission 15 entraîne un pivotement du levier 10 dans le sens antihoraire. Le panier 1 entraîné par le moyen d'accrochage 7 monté sur le levier 10 coulisse vers le haut sur la glissière 5.

Des moyens de blocage du levier 10 dans une position correspondant à la position relevée du panier 1 sont prévus pour éviter la redescente du panier 1 après relâchement de la poignée 3.

Selon une première disposition, lors de la rotation de la pièce de transmission 15 dans le sens horaire la première articulation 12, la deuxième articulation 13 et le deuxième axe 14 forment un angle qui s'ouvre jusqu'à atteindre puis dépasser 180°. Tel que montré à la figure 3, lorsque la poignée 3 occupe la deuxième position le premier axe 11, la première articulation 12 et la deuxième articulation 13 forment un angle inférieur à 90°. Alors de par cet agencement angulaire, la sollicitation en rotation horaire du levier 10 sous l'action du poids du panier 1 a tendance à entraîner en rotation la pièce de transmission 15 dans le même sens horaire, ce qui contribue à faire remonter l'extrémité libre de la poignée 3 et non à la faire descendre. Le panier est ainsi bloqué en position haute par effet de genouillère.

De plus on remarquera sur la figure 3 que la première articulation 12, la deuxième articulation 13 et le deuxième axe 14 sont sensiblement alignés. De ce fait, le couple exercé sur la pièce de transmission 15 par le levier 10 en position relevée auquel est accroché un panier 1 chargé est très faible. Les frottements, notamment au niveau de la première articulation 12 et de la deuxième articulation 13 compensent les efforts exercés par le levier 10. De ce fait le premier axe 11, la première articulation 12 et la deuxième articulation 13 peuvent former un angle légèrement supérieur à 90° lorsque la poignée 3 occupe la deuxième position, sans que le panier 1 chargé d'aliments frits ou à frire ne redescende.

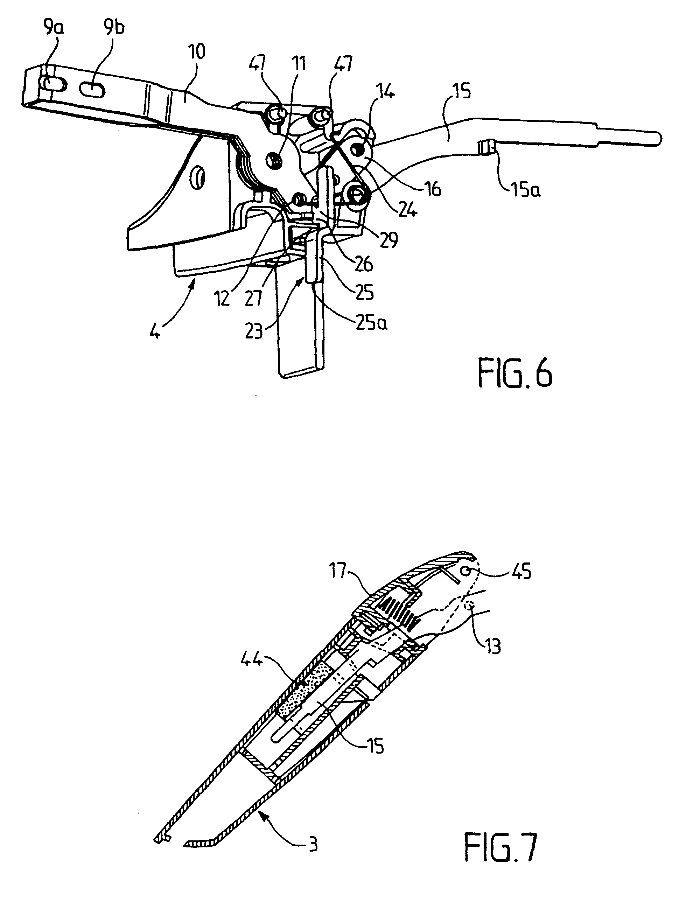

Par ailleurs, on remarquera sur les figures 2 et 3 que la poignée porte un organe de verrouillage 8 destiné à bloquer la poignée 3 en position relevée montré à la figure 3. L'organe de verrouillage 8 comporte un bouton de verrouillage 17 monté coulissant dans la poignée 3 contre un ressort 19. Le bouton de verrouillage 17 présente une découpe 18 dans laquelle passe la pièce de transmission 15. La pièce de transmission porte une butée 15a, mieux visible à la figure 6, prévue pour coopérer avec le bouton de verrouillage 17.

Dans la position abaissée de la poignée 3, montrée à la figure 2, la pièce de transmission vient en contact avec une butée supérieure 21 ménagée à l'intérieur de la poignée 3. Lorsque la poignée 3 est relevée, l'extrémité libre de la pièce de transmission 15 coulisse dans la découpe 18 tout en venant en contact avec une butée inférieure 22 ménagée dans la poignée 3. Dans la position montrée à la figure 3, la butée 15a a traversé la découpe 18 et le bouton de déverrouillage 17 poussé par le ressort 19 bloque la butée 15a. Une action sur le bouton de déverrouillage 17 est nécessaire pour permettre le coulissement de la pièce de transmission 15 dans la poignée 3 lors de la rotation antihoraire de la poignée 3 vers sa position verticale afin de descendre le panier 1 dans la cuve 2.

Ces dispositions peuvent être utilisées ensemble ou séparément.

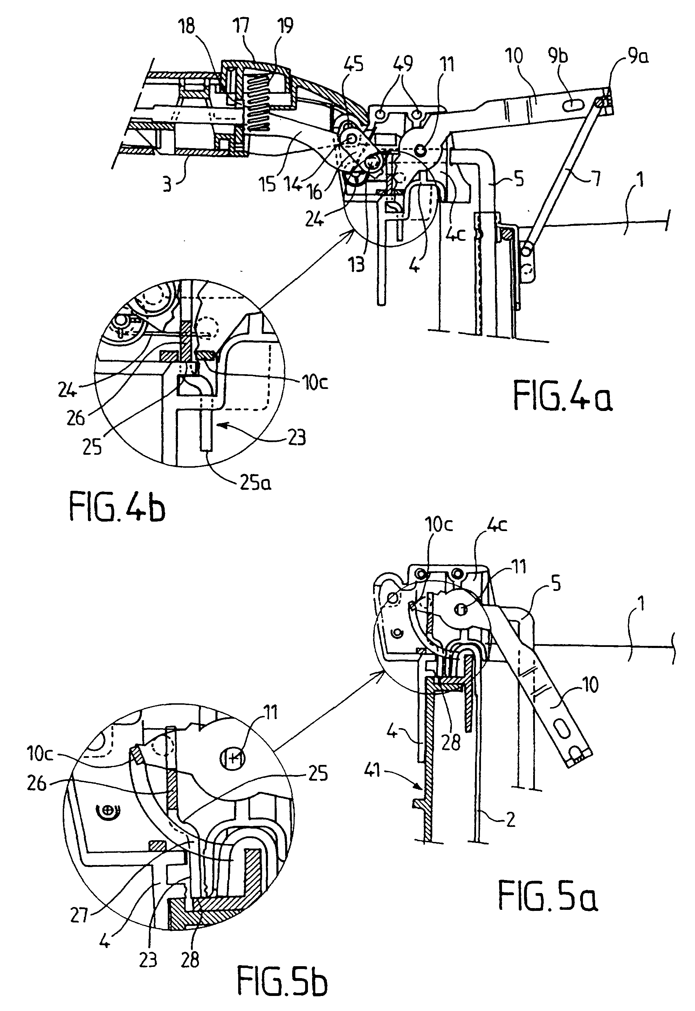

Les figures 4a, 4b, 5a, 5b et 6 montrent une variante de réalisation comportant un organe de détection 23 de présence de l'appareil, prévu pour autoriser la descente du panier 1 seulement si le support 4 est disposé en place sur l'appareil. L'organe de détection 23 comporte à cet effet un moyen de blocage 26 du levier 10 dans une position correspondant à la position relovée du panier 1. L'organe de détection 23 de présence de l'appareil est formé par une pièce 25 associée à un ressort 24, mieux visible à la figure 6. La pièce 25 est montée mobile contre le ressort 24 dans le support 4. La pièce 25 comporte une partie 25a susceptible de coopérer avec un rebord 28 de l'appareil lorsque le support 4 est disposé sur l'appareil, tel que montré à la figure 5b. Le moyen de blocage 26 ménagé sur la pièce 25 est susceptible de coopérer avec une butée 10c ménagée sur le levier 10, tel que montré à la figure 4b.

Lorsque le support 4 n'est pas en position sur l'appareil, tel que montré aux figures 4a et 4b, la pièce 25 occupe une position abaissée correspondant à la position de rappel, dans laquelle la butée 10c du levier 10 est arrêtée par le moyen de blocage 26.

Lorsque le support 4 est en position sur l'appareil, tel que montré aux figures 5a et 5b, le rebord 28 repousse la pièce 25 et une découpe 27 de ladite pièce en regard de la butée 10c autorise alors la rotation du levier. La poignée 3 peut être manoeuvrée pour descendre le panier 1.

Une autre variante de réalisation est montrée à la figure 7. Le dispositif de monte et baisse comporte un moyen de freinage 44 de la descente du panier 1 (non montré à la figure 7). Ce moyen de freinage est monté dans la poignée 3 et se présente sous la forme d'un bloc d'élastomère sur lequel vient frotter la pièce de transmission 15 lors du déplacement de la poignée vers sa position verticale, correspondant à la descente du panier. Le frottement de la pièce de transmission sur le bloc d'élastomère contribue à ralentir la descente du panier.

A titre de variante complémentaire, non montrée aux figures, le moyen de freinage 44 pourrait être formé par des moyens élastiques.

De nombreuses améliorations peuvent être apportées à ce dispositif dans le cadre des revendications.

Notamment, le levier 10 entraînant le panier 1 monté sur la glissière 5 par l'intermédiaire du moyen d'accrochage 7 peut être manoeuvré par d'autres types de poignée que la poignée 3 comportant la pièce de transmission 15.

Notamment, le levier 10 manoeuvré par la poignée 3 comportant la pièce de transmission 15 peut entraîner le panier 1 par d'autres moyens que le moyen d'accrochage 7 et la glissière 5.

Notamment, le levier 10 bloqué par le moyen de blocage 26 peut être manoeuvré par d'autres types de poignée que la poignée 3 comportant la pièce de transmission 15, et peut entraîner le panier 1 par d'autres moyens que le moyen d'accrochage 7 et la glissière 5.

Le dispositif de monte et baisse proposé peut notamment être utilisé pour des appareils destinés à des cuissons autres que les fritures en bain d'huile, tels que par exemple des cuiseurs à oeufs, à pâtes, et de manière générale pour toute cuisson en immersion totale ou partielle.

## Revendications

1. Dispositif de monte et baisse d'un panier (1) dans une cuve (2) d'un appareil de cuisson, notamment friteuse, comportant un support (4) prévu pour venir en appui sur l'appareil, une poignée (3), articulée sur le support (4), mobile entre une première position, dans laquelle le panier (1) occupe une position relevée dans la cuve (2), et une deuxième position, dans laquelle le panier (1) occupe une position abaissée dans la cuve (2), un levier (10) articulé en un axe (11) par rapport au support (4), une branche du levier (10) étant reliée au panier (1) par un ou plusieurs moyens d'accrochage (7), l'autre branche du levier (10) étant reliée à la poignée (3), **caractérisé en ce que** la poignée (3) est montée articulée sur le support (4) selon un axe (45) sensiblement parallèle à l'axe (11) du levier (10), l'autre branche du levier (10) comportant une articulation (12) avec l'extrémité d'une pièce de transmission (15) dont l'extrémité opposée est montée coulissante dans la poignée (3), la pièce de transmission (15) comportant en outre une deuxième articulation (13) avec une pièce de retenue (16) articulée en un deuxième axe (14) par rapport au support (4).

2. Dispositif de monte et baisse selon la revendication 1, **caractérisé en ce que** l'axe (11) est disposé au dessus de la zone d'appui sur l'appareil.

3. Dispositif de monte et baisse selon la revendication 2, **caractérisé en ce que** le premier axe (11), la première articulation (12) et la deuxième articulation (13) forment un angle inférieur à 90° lorsque la poignée (3) occupe la deuxième position.

4. Dispositif de monte et baisse selon l'une des revendications 2 ou 3, **caractérisé en ce que** la poignée (3) comporte un organe de verrouillage (8) prévu pour bloquer le coulissement de la pièce de transmission (15) lorsque la poignée (3) occupe la deuxième position.

5. Dispositif de monte et baisse selon l'une des revendications 2 à 4, **caractérisé en ce que** le support (4) est formé par deux demi boîtiers (4a, 4b) assemblés formant un logement (4c) pour le passage d'une des extrémités du levier (10) et de la pièce de transmission (15), la pièce de retenue (16) étant disposée dans ledit logement, ledit logement comportant des surfaces d'étanchéité (32) avec le levier (10).

6. Dispositif de monte et baisse selon l'une des revendications 2 à 5, **caractérisé en ce que** le levier (10) est formé par une pièce de tôle métallique de forme allongée et repliée en U, formant deux bras (10a, 10b) dont les extrémités viennent enserrer la pièce de transmission (15) au niveau de la première articulation (12).

7. Dispositif de monte et baisse selon la revendication 6, **caractérisé en ce que** la pièce de transmission (15) est formée par une pièce de tôle métallique de forme allongée dont l'une des extrémités est assemblée au moyen d'un axe avec les extrémités des deux bras (10a, 10b) du levier (10) pour former la première articulation (12), et sur laquelle sont assemblées de part et d'autre, au moyen d'un autre axe, deux pièces de retenue (16) pour former la deuxième articulation (13).

8. Dispositif de monte et baisse selon l'une des revendications 6 ou 7, **caractérisé en ce que** les bras (10a, 10b) du levier (10) s'écartent l'un de l'autre vers l'extrémité dudit levier en relation avec le moyen d'accrochage (7) du panier (1).

9. Dispositif de monte et baisse selon l'une des revendications 1 à 8, **caractérisé en ce qu'**un organe de détection (23) de présence de l'appareil est monté dans le support (4), ledit organe de détection comportant un moyen de blocage (26) du levier (10) dans une position correspondant à la position relevée du panier (1).

10. Dispositif de monte et baisse selon l'une des revendications 1 à 9, **caractérisé en ce qu'**un moyen de freinage (44) de la descente du panier (1) est monté dans la poignée (3), ledit moyen de freinage coopérant avec la pièce de transmission (15).

11. Dispositif de monte et baisse selon l'une des revendications 1 à 10, **caractérisé en ce qu'**il comporte une glissière (5) issue du support (4) et descendant dans la cuve (2), des moyens de guidage (6) du panier (1) montés coulissants sur la glissière (5), le moyen d'accrochage (7) du panier (1) étant monté mobile en rotation d'une part sur l'une des branches du levier (10) et d'autre part sur le panier (1) ou ses moyens de guidage (6).

12. Dispositif de monte et baisse selon la revendication 11, **caractérisé en ce que** le levier (10) comporte plusieurs moyens de retenue (9a, 9b) du moyen d'accrochage (7), prévus pour être utilisés en alternative.

13. Dispositif de monte et baisse selon l'une des revendications 11 ou 12, **caractérisé en ce que** le moyen d'accrochage (7) est susceptible d'être décroché du panier (1), de ses moyens de guidage (6) ou du levier (10).

14. Dispositif de monte et baisse selon l'une des revendications 11 à 13, **caractérisé en ce que** le moyen d'accrochage (7) est une pièce filaire présentant une flexibilité telle qu'elle soit apte à se décrocher du panier (1), de ses moyens de guidage (6) ou du levier (10) lorsque, le panier (1) étant bloqué, l'effort sur le levier (10) dépasse un effort déterminé.

15. Dispositif de monte et baisse selon l'une des revendications 13 ou 14, **caractérisé en ce que** la glissière (5) est dimensionnée de telle sorte à pouvoir sortir les moyens de guidage (6) du panier (1) de ladite glissière lorsque le moyen d'accrochage (7) a été décroché.

16. Dispositif de monte et baisse selon l'une des revendications 11 à 15, **caractérisé en ce que** la partie inférieure de la glissière (5) est susceptible de prendre appui contre la cuve (2).

17. Dispositif de monte et baisse selon l'une des revendications 11 à 16, **caractérisé en ce que** la glissière (5) présente une échancrure (33) dans laquelle le levier (10) est susceptible de se déplacer.

18. Dispositif de monte et baisse selon l'une des revendications 1 à 17, **caractérisé en ce que** la glissière (5) comporte deux points de fixation avec le support (4) disposés de part et d'autre du levier (10).

## Patentansprüche

1. Vorrichtung zum Anheben und Absenken eines Korbes (1) in einer Schüssel (2) eines Kochgeräts, insbesondere einer Friteuse, mit einem Träger (4), der vorgesehen ist, um am Gerät anzuliegen, einem Griff (3), der am Träger (4) angelenkt ist und zwischen einer ersten Stellung, in welcher der Korb (1) eine angehobene Position in der Schüssel (2) einnimmt, und einer zweiten Stellung, in welcher der Korb (1) eine abgesenkte Position in der Schüssel (2) einnimmt, beweglich ist, einem Hebel (10), der an einer Achse (11) bezüglich des Trägers (4) angelenkt ist, wobei ein Abschnitt des Hebels (10) mit dem Korb (1) durch ein oder mehrere Einhängemittel (7) verbunden ist und der andere Abschnitt des Hebels (10) mit dem Griff (3) verbunden ist, **dadurch gekennzeichnet, daß** der Griff (3) am Träger (4) gemäß einer zur Achse (11) des Hebels (10) im wesentlichen parallelen Achse (45) angelenkt montiert ist, wobei der andere Abschnitt des Hebels (10) eine Anlenkung (12) am Ende eines Übertragungsstücks (15) aufweist, dessen entgegengesetztes Ende im Griff (3) gleitend angebracht ist, wobei das Übertragungsstück (15) außerdem eine zweite Anlenkung (13) an einem Haltestück (16) aufweist, das an einer zweiten Achse (14) bezüglich des Trägers (4) angelenkt ist.

2. Vorrichtung zum Anheben und Absenken nach Anspruch 1, **dadurch gekennzeichnet, daß** die Achse (11) oberhalb der Anlagezone am Gerät angeordnet ist.

3. Vorrichtung zum Anheben und Absenken nach Anspruch 2, **dadurch gekennzeichnet, daß** die erste Achse (11), die erste Anlenkung (12) und die zweite Anlenkung (13) einen Winkel bilden, der kleiner als 90° ist, wenn der Griff (3) die zweite Stellung einnimmt.

4. Vorrichtung zum Anheben und Absenken nach einem der Ansprüche 2 oder 3, **dadurch gekennzeichnet, daß** der Griff (3) eine Verriegelungseinrichtung (8) aufweist, die vorgesehen ist, um das Gleiten des Übertragungsstücks (15), wenn der Griff (3) die zweite Stellung einnimmt, zu blockieren.

5. Vorrichtung zum Anheben und Absenken nach einem der Ansprüche 2 bis 4, **dadurch gekennzeichnet, daß** der Träger (4) aus zwei zusammengefügten Halbgehäusen (4a, 4b) gebildet ist, die eine Aufnahme (4c) für den Durchgang von einem der Enden des Hebels (10) und des Übertragungsstücks (15) bilden, wobei das Haltestück (16) in der Aufnahme angeordnet ist, wobei die Aufnahme Dichtungsflächen (32) mit dem Hebel (10) aufweist.

6. Vorrichtung zum Anheben und Absenken nach einem der Ansprüche 2 bis 5, **dadurch gekennzeichnet, daß** der Hebel (10) aus einem Metallblechstück mit länglicher und zu einem U umgebogener Form gebildet ist, welches zwei Arme (10a, 10b) bildet, deren Enden das Übertragungsstück (15) auf der Höhe der ersten Anlenkung (12) einspannen.

7. Vorrichtung zum Anheben und Absenken nach Anspruch 6, **dadurch gekennzeichnet, daß** das Übertragungsstück (15) aus einem Metallblechstück mit länglicher Form gebildet ist, von welchem eines der Enden mittels einer Achse an den Enden der zwei Arme (10a, 10b) des Hebels (10) montiert ist, um die erste Anlenkung (12) zu bilden, und an welchem auf beiden Seiten mittels einer anderen Achse zwei Haltestücke (16) montiert sind, um die zweite Anlenkung (13) zu bilden.

8. Vorrichtung zum Anheben und Absenken nach einem der Ansprüche 6 oder 7, **dadurch gekennzeichnet, daß** die Arme (10a, 10b) des Hebels (10) sich zum Ende des Hebels in Verbindung mit dem Einhängemittel (7) des Korbes (1) voneinander entfernen.

9. Vorrichtung zum Anheben und Absenken nach einem der Ansprüche 1 bis 8, **dadurch gekennzeichnet, daß** eine Einrichtung (23) zum Erfassen der Anwesenheit des Geräts im Träger (4) montiert ist, wobei die Einrichtung zum Erfassen ein Mittel (26) zum Blockieren des Hebels (10) in einer der angehobenen Position des Korbes (1) entsprechenden Stellung aufweist.

10. Vorrichtung zum Anheben und Absenken nach einem der Ansprüche 1 bis 9, **dadurch gekennzeichnet, daß** ein Mittel (44) zum Bremsen der Abwärtsbewegung des Korbes (1) in dem Griff (3) angebracht ist, wobei das Mittel zum Bremsen mit dem Übertragungsstück (15) zusammenwirkt.

11. Vorrichtung zum Anheben und Absenken nach einem der Ansprüche 1 bis 10, **dadurch gekennzeichnet, daß** sie eine Gleitschiene (5) aufweist, die vom Träger (4) stammt und in der Schüssel (2) abwärts verläuft, wobei Mittel (6) zur Führung des Korbes (1) an der Gleitschiene (5) gleitend angebracht sind, wobei das Einhängemittel (7) des Korbes (1) einerseits an einem der Abschnitte des Hebels (10) und andererseits am Korb (1) oder seinen Führungsmitteln (6) drehbar angebracht ist.

12. Vorrichtung zum Anheben und Absenken nach Anspruch 11, **dadurch gekennzeichnet, daß** der Hebel (10) mehrere Mittel (9a, 9b) zum Halten des Einhängemittels (7) aufweist, die zur alternativen Verwendung vorgesehen sind.

13. Vorrichtung zum Anheben und Absenken nach einem der Ansprüche 11 oder 12, **dadurch gekennzeichnet, daß** das Einhängemittel (7) vom Korb (1), von seinen Führungsmitteln (6) oder vom Hebel (10) ausgehängt werden kann.

14. Vorrichtung zum Anheben und Absenken nach einem der Ansprüche 11 bis 13, **dadurch gekennzeichnet, daß** das Einhängemittel (7) ein drahtartiges Stück ist, das eine Flexibilität aufweist, so daß es vom Korb (1), von seinen Führungsmitteln (6) oder vom Hebel (10) ausgehängt werden kann, wenn bei Blockierung des Korbs (1) die Kraft auf dem Hebel (10) eine bestimmte Kraft übersteigt.

15. Vorrichtung zum Anheben und Absenken nach einem der Ansprüche 13 oder 14, **dadurch gekennzeichnet, daß** die Gleitschiene (5) derart bemessen ist, daß sie die Führungsmittel (6) des Korbes (1) von der Gleitschiene entfernen kann, wenn das Einhängemittel (7) ausgehängt wurde.

16. Vorrichtung zum Anheben und Absenken nach einem der Ansprüche 11 bis 15, **dadurch gekennzeichnet, daß** der untere Teil der Gleitschiene (5) an der Schüssel (2) anliegen kann.

17. Vorrichtung zum Anheben und Absenken nach einem der Ansprüche 11 bis 16, **dadurch gekennzeichnet, daß** die Gleitschiene (5) eine Aussparung (33) aufweist, in welcher sich der Hebel (10) verlagern kann.

18. Vorrichtung zum Anheben und Absenken nach einem der Ansprüche 1 bis 17, **dadurch gekennzeichnet, daß** die Gleitschiene (5) zwei Befestigungspunkte am Träger (4) aufweist, die auf beiden Seiten des Hebels (10) angeordnet sind.

## Claims

1. A device for raising and lowering a basket (1) in a vessel (2) of a cooking appliance, in particular a fryer, the device comprising a support (4) provided so as to bear on the appliance, a handle (3) hinged to the support (4), and movable between a first position, in which the basket (1) occupies a raised position in the vessel (2), and a second position, in which the basket (1) occupies a lowered position in the vessel (2), a lever (10) hinged about a pin (11) relative to the support (4), one branch of the lever (10) being connected to the basket (1) by one or more fastening means (7), the other branch of the lever (10) being connected to the handle (3), the device being **characterized in that** the handle (3) is mounted on the support (4) to pivot about a pin (45) that is substantially parallel to the pin (11) of the lever (10), the said other branch of the lever (10) including a hinge (12) with the end of a transmission piece (15) having an opposite end that is slidably mounted in the handle (3), the transmission piece (15) further including a second hinge (13) with a holding piece (16) hinged about a second pin (14) relative to the support (4).

2. A raising and lowering device according to claim 1, **characterized in that** the pin (11) is disposed above the bearing zone for bearing on the appliance.

3. A raising and lowering device according to claim 2, **characterized in that** the first pin (11), the first hinge (12), and the second hinge (13) form an angle that is less than 90° when the handle (3) occupies the second position.

4. A raising and lowering device according to claim 2 or claim 3, **characterized in that** the handle (3) includes a locking member (8) provided to prevent the transmission piece (15) from sliding when the handle (3) occupies the second position.

5. A raising and lowering device according to any one of claims 2 to 4, **characterized in that** the support (4) is formed by two assembled-together half housings (4a, 4b) forming a housing (4c) through which one of the ends of the lever (10) and of the transmission piece (15) can pass, the holding piece (16) being disposed in said housing, said housing including sealing surfaces (32) for sealing with the lever (10).

6. A raising and lowering device according to any one of claims 2 to 5, **characterized in that** the lever (10) is formed by an elongate piece of sheet metal folded into a U-shape forming two arms (10a, 10b) having ends that clamp the transmission piece (15) at the first hinge (12).

7. A raising and lowering device according to claim 6, **characterized in that** the transmission piece (15) is formed by an elongate piece of sheet metal having one end that is assembled by means of a pin with the respective ends of the two arms (10a, 10b) of the lever (10) so as to form the first hinge (12), and on either side of which transmission piece two holding pieces (16) are assembled by means of another pin so as to form the second hinge (13).

8. A raising and lowering device according to claim 6 or claim 7, **characterized in that** the arms (10a, 10b) of the lever (10) are spaced apart from each other towards the end of said lever in relation with the fastening means (7) of the basket (1).

9. A raising and lowering device according to any one of claims 1 to 8, **characterized in that** a detection member (23) for detecting the presence of the appliance is mounted in the support (4), said detection member including locking means (26) for locking the lever (10) in a position corresponding to the raised position of the basket (1).

10. A raising and lowering device according to any one of claims 1 to 9, **characterized in that** braking means (44) for braking the lowering of the basket (1) is mounted in the handle (3), said braking means co-operating with the transmission piece (15).

11. A raising and lowering device according to any one of claims 1 to 10, **characterized in that** it includes a slideway (5) originating from the support (4) and descending into the vessel (2), guide means (6) for guiding the basket (1), which guide means are slidably mounted on the slideway (5), the fastening means (7) for fastening the basket (1) being rotably mounted firstly on one of the branches of the lever (10) and secondly on the basket (1) or its guide means (6).

12. A raising and lowering device according to claim 11, **characterized in that** the lever (10) includes a plurality of holding means (9a, 9b) for holding the fastening means (7), said holding means being designed to be used in alternation.

13. A raising and lowering device according to claim 11 or claim 12, **characterized in that** the fastening means (7) is capable of being unhooked from the basket (1), from its guide means (6), or from the lever (10).

14. A raising and lowering device according to any one of claims 11 to 13, **characterized in that** the fastening means (7) is a wire piece presenting flexibility such that it is capable of being unhooked from the basket (1), from its guide means (6), or from the lever (10) when, with the basket (1) being blocked, the force on the lever (10) exceeds a determined force.

15. A raising and lowering device according to claim 13 or claim 14, **characterized in that** the slideway (5) is dimensioned so as to be able to release the guide means (6) of the basket (1) from said slideway when the fastening means (7) has been unhooked.

16. A raising and lowering device according to any one of claims 11 to 15, **characterized in that** the bottom portion of the slideway (5) is capable of bearing against the vessel (2).

17. A raising and lowering device according to any one of claims 11 to 16, **characterized in that** the slideway (5) presents a notch (33) into which the lever (10) is capable of moving.

18. A raising and lowering device according to any one of claims 1 to 17, **characterized in that** the slideway (5) includes two fixing points for fixing to the support (4), which fixing points are disposed on either side of the lever (10).
